# EUROPEAN PATENT APPLICATION

(11) **EP 3 328 050 A1**
(43) Date of publication of application: **30.05.2018**
(21) Application number: 16200279.4
(22) Date of filing: 23.11.2016
(51) Int. Cl.: H04N 1/52, G06K 15/02, G06F 3/12

(54) **GENERATING A HALFTONE IMAGE**

(71) Applicant: HP Scitex Ltd, 42506 Netanya (IL)
(72) Inventor: VEIS, Alex, 42505 Netanya (IL); BEN YISHAI, Michael, 42505 Netanya (IL)
(74) Representative: EIP

(57) **Abstract**

In one example, a first subset of a plurality of pixels in a halftone is determined to be associated with a first colorant. A second subset of the plurality of pixels in the halftone is determined to be associated with a second colorant, the second colorant being different from the first colorant. Pixel data associating a pixel in the plurality of pixels in the halftone with the first colorant and not the second colorant is generated when the pixel is included in the first subset and the second subset. Pixel data associating the pixel in the plurality of pixels in the halftone with the second colorant and not the first colorant is generated when the pixel is included in the second subset and not the first subset.

## Description

### BACKGROUND

A printing system may be associated with a color space (hereinafter termed a "colorant color space"), defined by one or more colorants available to the printing system for deposition or application to a print medium. An example of a colorant color space is the Cyan (C), Magenta (M), Yellow (Y), Black (K) color space (also termed the "CMYK" color space), wherein four variables are used in a subtractive color model to represent respective quantities of colorants. Examples of colorants include printing fluids (e.g. inks, dyes, pigments and/or paints) and printing powders (e.g. toners).

### BRIEF DESCRIPTION OF THE DRAWINGS

Various features of the present disclosure will be apparent from the detailed description which follows, taken in conjunction with the accompanying drawings, which together illustrate, by way of example only, features of the present disclosure, and wherein:
Figure 1 is a schematic diagram showing a color separated halftone printed on a print medium in accordance with an example.
Figure 2 is a schematic diagram showing a plurality of partial halftone screens used to produce a halftone in accordance with an example.
Figure 3 is a schematic diagram showing an imaging pipeline in accordance with an example.
Figure 4 is a flow diagram showing a method of generating halftone data in accordance with an example.
Figure 5 is a schematic diagram showing an imaging pipeline in accordance with an example.
Figure 6 is a flow diagram showing a method of generating halftone data in accordance with an example.
Figure 7 is a schematic diagram showing an imaging pipeline in accordance with an example.
Figure 8 is a flow diagram showing a method of controlling printing of a halftone in accordance with an example.
Figure 9 is a schematic diagram showing a colorant deposition system in accordance with an example.
Figure 10 is a schematic diagram showing a non-transitory computer readable storage medium in accordance with an example.

### DETAILED DESCRIPTION

In the following description, for purposes of explanation, numerous specific details of certain examples are set forth. Reference in the description to "an example" or similar language means that a particular feature, structure, or characteristic described in connection with the example is included in at least that one example, but not necessarily in other examples.

A printing system may utilize a halftone process to reproduce a continuous tone image in the colorant color space using a series of shapes (e.g. dots). This enables the printing system to approximate a continuous tone image by using a discrete number of colorant levels (e.g. a discrete number of printing fluid drops per unit area). The result of this process is an output in the form of a color separated halftone comprising a halftone screen for each colorant available to the printing system. The output of any particular printing system is dependent on the characteristics of the particular halftone process that is used by the printing system.

Amplitude modified halftones refer to halftone patterns wherein a plurality of dots of varying sizes are used to reproduce a range of tones in a given halftone screen. The dots may be round, elliptical, square or any other suitable shape. The plurality of dots in a given halftone screen are arranged according to a grid or lattice, with relatively dark tones being reproduced using relatively large dots and relatively lighter tones being reproduced using relatively small dots. Amplitude modified halftones have found widespread use in analog printing systems, according to which the halftone screens are transferred to a print medium using manually prepared plates for each colorant. However, the relatively high registration errors inherent to analog printing techniques generally necessitates that the halftone screens are angularly offset from one another to prevent against undesirable interference between the halftone screens (e.g. moire patterning).

The range of discrete tones which can be reproduced using amplitude modified halftone in digital printing systems is dictated by the maximum print resolution achievable by such systems. For example, early ink jet printing system were limited to maximum print-resolutions in the range of 25 to 50 NPI (nozzles per inch), thereby limiting the range of discrete tones which could be reproduced for a given print quality. However, improvements in digital printing technologies now enable print resolutions in excess of 2,400 NPI, thereby expanding the range of discrete tones which can be reproduced for a given print quality. Moreover, because such techniques provide direct deposition of colorant onto a print medium without separate preparation of plates for each colorant, registration errors are low in comparison to analog printing techniques. Examples of such digital printing systems include inkjet printing systems based on the Falcon™ print head developed by Hewlett Packard™, Inc. of Palo Alto, California, United States of America.

The overall cost of a digital printing process is based on factors including colorant cost and colorant efficiency (i.e. the quantity of a colorant to reproduce an image on the print medium). In the case of printing fluid based printing techniques, the printing fluid efficiency is often lower than that used in analog printing processes due to relatively inaccurate drop placement lower pigment content, which in turn necessitates thicker printing fluid layers. For example, a printing fluid used in a digital printing process may comprise 1 to 3 percent pigment, whereas a printing fluid used in an analog printing process may comprises 10 to 30 percent pigment. Thus, the digital printing process will use an order of magnitude more printing fluid than the analog printing process to reproduce the same color on the print medium.

In cases where a first colorant with relatively high light absorbance (e.g. a black colorant) and a second colorant with a relatively low light absorbance (e.g. a cyan, magenta or yellow colorant) are overlapping on a print medium, the first colorant may dominate the colorimetry of the overlapping region and, in some circumstances, render the second colorant redundant in the overlapping region. Certain examples described herein exploit this redundancy in halftone techniques for digital printing systems to provide improved colorant efficiency. In other words, certain examples provide halftone techniques which utilize the differences in relative light absorbance between different colorants to reduce colorant usage with minimal effect on the colorimetry of the resulting image on a print medium.

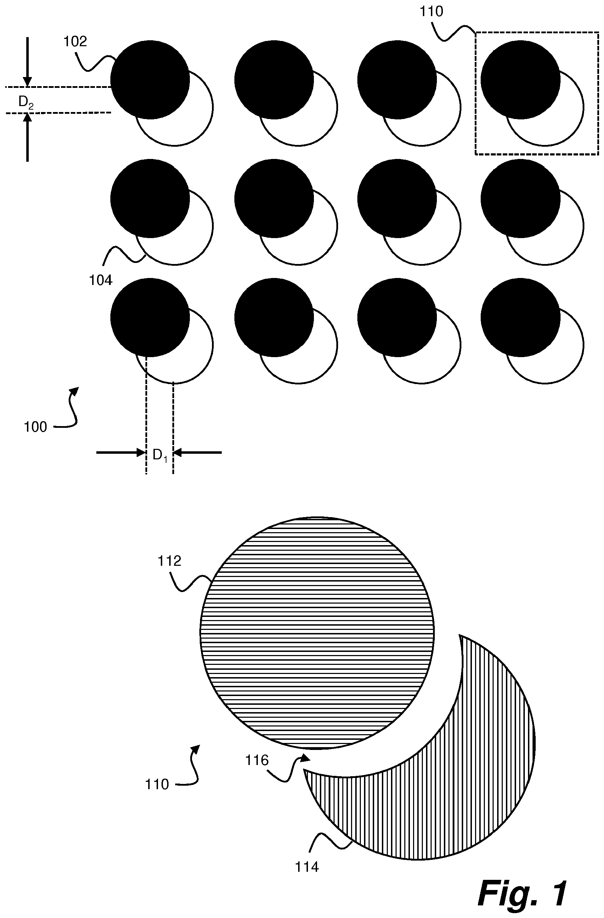

Figure 1 shows an example of a color separated amplitude modulated halftone 100 printed on a print medium. For example, the halftone 100 may be printed on the print medium using a digital printing system, such as an inkjet printing system. The halftone 100 includes a first halftone screen 102 associated with a first colorant (represented as black dots in Figure 1) and a second halftone screen 104 associated with a second colorant (represented as white dots in Figure 1). In other examples, the halftone 100 may comprise further halftone screens corresponding to further colorants in a colorant color space associated with the digital printing system. For example, the halftone may comprise four halftone screens corresponding to Cyan (C), Magenta (M), Yellow (Y) and Black (K) colorants in a CMYK color space.

In the example shown in Figure 1, the first halftone screen 102 and the second halftone screen 104 are orientated in the same angular direction, and offset by a distance D₁ in a horizontal direction and a distance D₂ in a vertical direction. Thus, in order to avoid partial overlap of the first halftone screen 102 and the second halftone screen 104, the second halftone screen 104 has been modified to avoid redundant deposition of the second colorant. In this respect, interference between the first halftone screen 102 and the second halftone screen 104 is minimal due to the relatively small registration and angular errors associated with the digital printing process. In other examples, the first halftone screen 102 and the second halftone screen 104 may be orientated according to an angular offset.

Figure 1 further shows an exploded view of a pair of dots 110 from the halftone 100 printed on the print medium. In particular, the exploded shows the colorant deposition areas for the first colorant (shown with horizontal hatching) and the second colorant (shown with vertical hatching) corresponding to the first halftone screen 102 and the second halftone screen 104 respectively. In this respect, the pair of dots 110 includes a first dot 112 formed from the first colorant and a second dot 114, complementary to the first dot 112, formed from the second colorant. In this example, the first dot 112 is a circular dot and the second dot 114 is a complementary "moon" shaped dot. Thus, the use of complementary and non-overlapping dots for the pair of dots 110 avoids overlapping deposition of the first colorant and the second colorant.

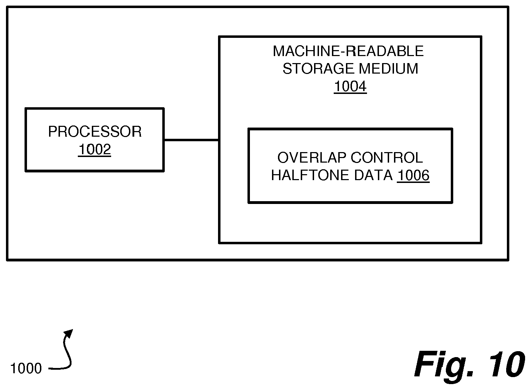

The exploded view of the pair of dots 110 shown in Figure 10 includes a gap 116 between the first dot 112 and a second dot 114. It will be understood that this gap 116 is shown for illustrative purposes. In further examples, the areas defined by the first dot 112 and the second dot 114 may be contiguous (i.e. no gap) or in other examples may include a small overlap to accommodate potential registration errors associated with deposition of the first and/or second colorants.

As discussed above, the halftone 100 shown in Figure 1 may be printed using a digital printing system. In such examples, each dot in the halftone 100 is formed from a plurality of print-level pixels (hereinafter termed "pixels") which are formed on the print medium by discrete colorant deposition (e.g. discrete printing fluid drops). In other words, each pixel represents a finite area of the print medium which is addressable by the digital printing system. In this respect, the halftone 100 is formed on the basis of a data structure (hereinafter termed "halftone data") which represents the state of pixel in the halftone. In some examples, the halftone data may take the form of a matrix, a table, an array, or any other suitable data structure.

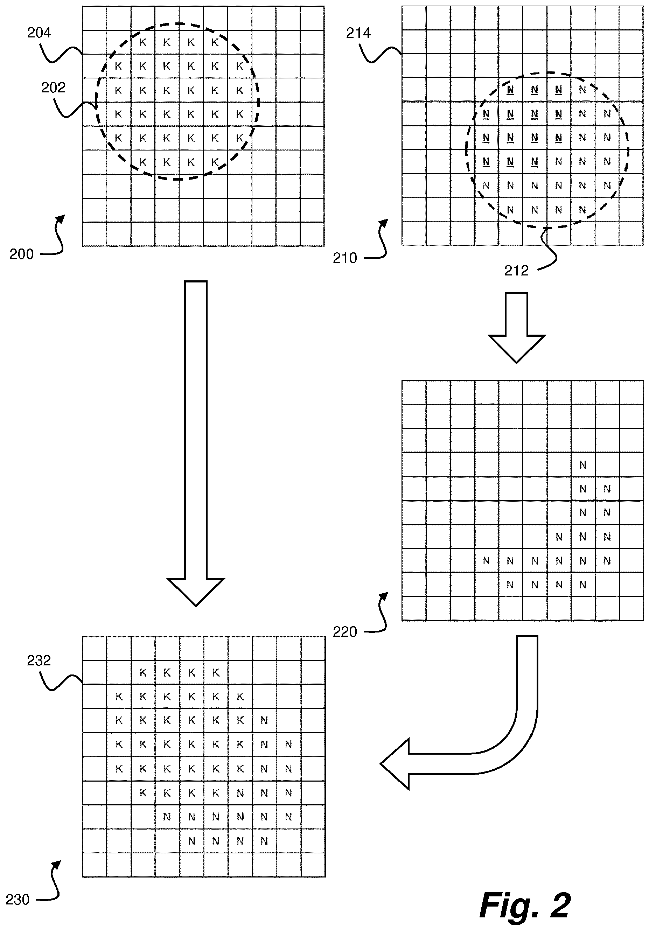

Figure 2 shows a plurality of halftone data structures used to produce the halftone 100 of Figure 1. Figure 2 includes a first halftone data structure 200 representing a portion of the first halftone screen 102 associated with the first colorant. In particular, Figure 2 shows a portion of the first halftone screen 102 encompassing to the first dot 112 of Figure 1 resulting from an amplitude modulated halftone process. To assist explanation, the location of the first dot 112 is indicated by dashed circle 202 but it will be understood that this feature does not form part of the first halftone data structure 200. The first halftone data structure 200 takes the form of an array 204 comprising a plurality of cells, with each cell representing pixel data corresponding to a pixel in the halftone (i.e. an addressable location on the print medium). Each cell in the array 204 can assume an active state (i.e. indicating that the first colorant should be deposited at the corresponding addressable location on the print medium) or an inactive state (i.e. indicating that the first colorant should not be deposited at the corresponding addressable location on the print medium). In the present example, the first colorant is a black colorant and active cells in the array 204 are denoted as using "K" for clarity. Thus, the first dot 112 is represented by a plurality of 32 active pixels which, in combination, approximate the dashed circle 202. In this respect, it can been seen that the first halftone data structure 200 would result in deposition of 32 discrete units of the black colorant (e.g. 32 drops of black printing fluid) on the print medium.

Figure 2 shows a second halftone data structure 210 representing a portion of a halftone screen resulting from an amplitude modulated halftone process for the second colorant in the halftone 100 of Figure 1.. In this respect, the second halftone data structure 210 defines a circular dot which partially overlaps with the circular dot defined by the first halftone data structure 200. Again, to assist explanation, the location of the circular dot defined by the second halftone data structure 210 is indicated by dashed circle 212 but it will be understood that this feature does not form part of the second halftone data structure 210. The second halftone data structure 210 takes the form of an array 214 comprising a plurality of cells, with each cell representing pixel data corresponding to a pixel in the halftone (i.e. an addressable location on the print medium). Each cell in the array 214 can assume an active state (i.e. indicating that the second colorant should be deposited at the corresponding addressable location on the print medium) or an inactive state (i.e. indicating that the second colorant should not be deposited at the corresponding addressable location on the print medium). In the present example, the second colorant is a non-black colorant (e.g. a yellow colorant) and active cells in the array 204 are denoted as "N" for clarity. Thus, the circular dot is represented by a plurality of 32 active pixels which, in combination, approximate the dashed circle 212. In this respect, it can been seen that the second halftone data structure 210 would result in deposition of 32 discrete units of the non-black colorant (e.g. 32 drops of yellow printing fluid) on the print medium.

In combination, it can been seen that a combination of the first halftone data structure 200 and the second halftone data structure 210 would result in deposition of 32 discrete units of the black colorant (e.g. 32 drops of black printing fluid) and 32 discrete units of the non-black colorant (e.g. 32 drops of yellow printing fluid). However, it is also apparent that 14 discrete units of the non-black colorant (denoted as "N" in Figure 2) will overlap with areas of black colorant as defined by the first halftone data structure 200. In other words, in combination, the first halftone data structure 200 and the second halftone data structure 210 would result in deposition of 64 units of colorant at 50 pixel locations in the printed halftone. In this respect, 14 of the 50 pixels will include overlapping black and non-black colorant (e.g. black printing fluid on yellow printing fluid, or yellow printing fluid on black printing fluid depending on the deposition order).

As discussed above, a colorant with a relatively low light absorbency (e.g. yellow) may have limited influence of colorimetry when printed on or under a colorant with relatively high light absorbency (e.g. black). Thus, the non-back colorant component of the 14 overlapping pixels in the second halftone data structure of Figure 2 are redundant in terms of colorimetry and therefore present an opportunity for more efficient use of colorant.

To utilize this redundancy, certain examples modify the second halftone data structure 210 to remove or "deactivate" active pixels in the halftone to prevent redundant deposition of the second colorant. In this respect, Figure 2 shows an example of the second halftone data structure 210 which has been modified by deactivating active pixels corresponding to the overlapping area to produce a modified second halftone data structure 220. A comparison of the second halftone data structure 210 and the modified second halftone data structure 220 shows that in total 14 active pixels in the second halftone data structure 210 for the non-black colorant have been deactivated, which represents a 44 percent reduction in colorant usage for the second dot 114 and a 22 percent reduction in overall colorant usage for the pair of dots 110. In this respect, it will be appreciated that the degree to which this modification of the second halftone screen 210 provides improvements in colorant efficiency is dependent on the size of the dots and the extent to which they overlap.

The first halftone data structure 200 and the modified second halftone data structure 220 can be combined or represented as a combined halftone data structure 230 as shown in Figure 2. In this respect, the combined halftone data structure 230 does not include any cells specifying deposition of both the black colorant and the non-black colorant and thus avoids redundant deposition of non-black colorant on the print medium.

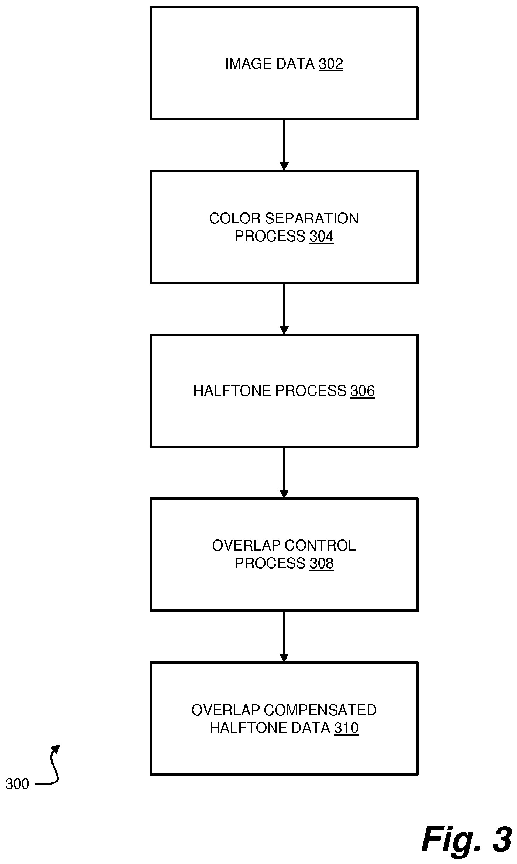

Figure 3 shows an imaging pipeline 300 in accordance with an example. In particular, the imaging pipeline 300 provides overlap control to facilitate efficient colorant usage in the manner described above with reference to Figure 2. According to this example, the imaging pipeline 300 receives image data 302 that is passed into a color separation process 304. The image data 302 may comprise color data represented in an image color space, such as image-level pixel representations in a RGB color space. The color separation process 304 maps the color data from the image color space to a colorant color space, such as the CMYK color space. To perform this color separation, the color separation process 304 may utilize profiles characterizing the image color space and the colorant color space with respect a profile connection space. For example, the color separation process 304 may utilize the CIELAB color space, specified by the International Commission on Illumination, in conjunction with ICC profiles defined for the image color space and the colorant color space according to standards specified by the International Color Consortium. The output of the color separation process 302 is data representing a color separated image corresponding to each colorant in the colorant color space. This data is provided to a halftone process 306 for generation of halftone data representing a plurality of amplitude modified halftone screens representative of the color separated image.

Once the halftone process 306 has been completed, the resulting halftone data is provided to an overlap control process 308 which analyses the halftone data to identify pixel data corresponding to redundant colorant deposition. For example, the overlap control process 308 analyses the halftone data to identify pixel data specifying one or more pixels in the halftone data comprising colorant with relatively high light absorbency (e.g. a black colorant) and one of more colorants with relatively low light absorbency (e.g. a cyan colorant, a magenta colorant, and/or a yellow colorant). The overlap control process 308 then proceeds to modify the identified pixel data to prevent deposition of the relatively low light absorbency colorants, thereby preventing redundant colorant deposition. Finally, the halftone data comprising the modified pixel data is output as overlap compensated halftone data 310 for subsequent use in a colorant deposition process.

In some examples, the profile characterizing the colorant color space (e.g. an ICC profile) may be modified to account for suppression of redundant colorant in the manner described above. However, in most cases the suppression of redundant colorant and minimal effect on the colorimetry of the printed halftone. Thus, the overlap control process 308 can be implemented in an imaging pipeline without modification of the preceding processes in the imaging pipeline.

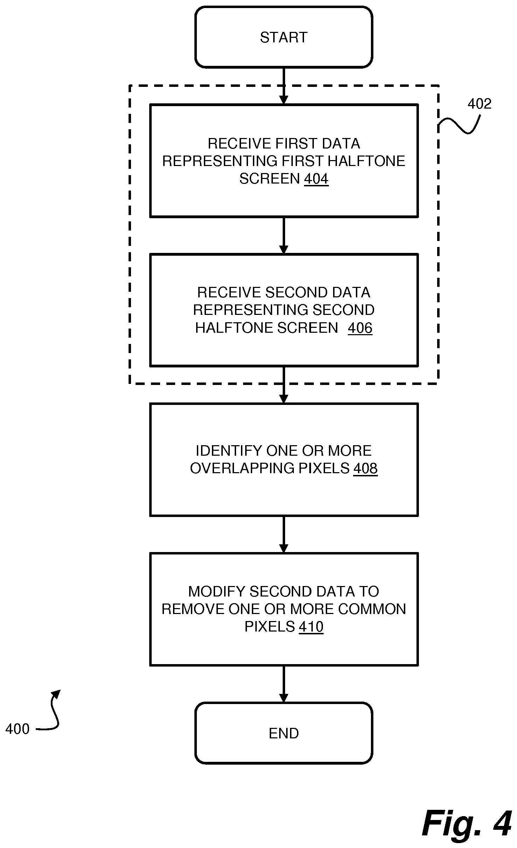

Figure 4 shows an example of a method 400 performed by the overlap control process 310 of Figure 3 to prevent redundant colorant deposition. At block 402, the overlap control process 310 receives data representing a halftone comprising a plurality of halftone screens generated by the halftone process 308. The example shown in Figure 4 comprises receipt of first data representing a halftone screen for a first colorant (e.g. a black colorant) at block 404, and second data representing a second halftone screen for a second colorant (e.g. a non-black colorant) at block 406. The first data represents the first halftone screen by associating a first subset of pixels in the halftone with the first colorant and the second data represents the second halftone screen by associating a second plurality of pixels in the halftone with the second colorant. At block 408, the overlap control process 310 identifies one or more pixels common to the first subset of the plurality of pixels and the second subset of the plurality of pixels. In other words, the overlap control process 310 identifies one of more pixels in the halftone which specify overlapping of the first colorant and the second colorant. Following this identification, the overlap control process 310 modifies the second data to remove or the one or more pixels from the second subset of pixels at block 410. In other words, the overlap control process 310 modifies the halftone data to ensure that deposition of second colorant is prevented for pixels which also specify deposition of the first colorant. In this manner, redundant deposition of the second colorant is prevented and improved printing fluid efficiency is achieved.

As discussed above, the plurality of halftone screens defined by the halftone data may be amplitude modified halftone screens. In such examples, the first subset pixels defines a first continuous region corresponding to first dot in a first amplitude modulated halftone pattern and the second subset pixels defines a second continuous region corresponding to a second dot in a second amplitude modulated halftone pattern. In other examples, the plurality of halftone screens defined by the halftone data may be frequency modulated halftone screen. In such examples, the first subset of pixels are spatially distributed according to a first frequency modulated halftone pattern and the second subset of pixels are spatially distributed according to a second frequency modulated halftone pattern. In both cases, the overlap control process 310 processes the halftone data to identify individual pixels which define overlapping deposition of the first colorant and the second colorant, and modifies the halftone data for the identified pixels to prevent redundant deposition of the second colorant.

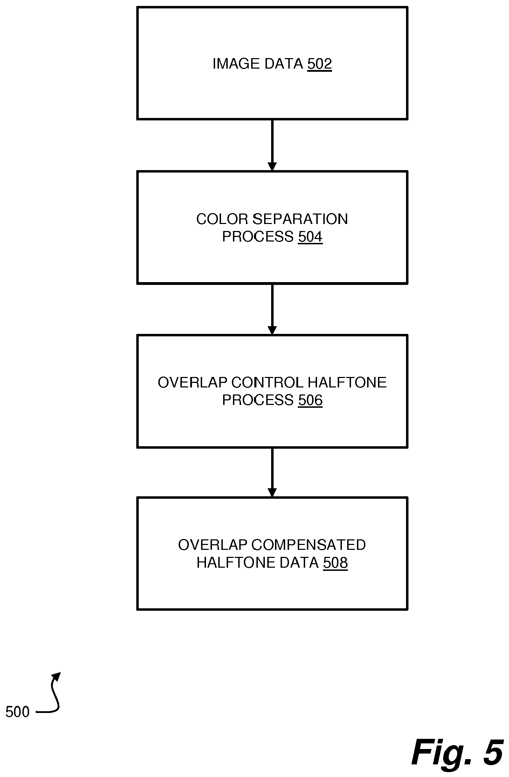

In some examples, the overlap control processing described above with reference to Figures 3 and 4 may be integrated into the halftone process to provide an overlap control halftone process. An example of an imaging pipeline 500 incorporating such integrated processing is shown in Figure 5. According to this example, the imaging pipeline 500 receives image data 502 and processes the image data 502 in a color separation process 504 in the same manner to that performed by the color separation process 304 described above with reference to Figure 3. Data representing a color separated image resulting from the color separation process 504 is provided to an overlap control halftone process 506 which proceeds to generate halftone screens for each colorant, accounting for and preventing redundant overlap between colorants. For example, the overlap control halftone process 506 may first generate a first halftone screen corresponding to a black colorant, and subsequently generate a second halftone screen for a yellow colorant that suppresses deposition of the yellow colorant at pixel locations previously specified for the black colorant in the first halftone screen. The result of this processing is overlap compensated halftone data 310 which may be used for subsequent colorant deposition by a printing system.

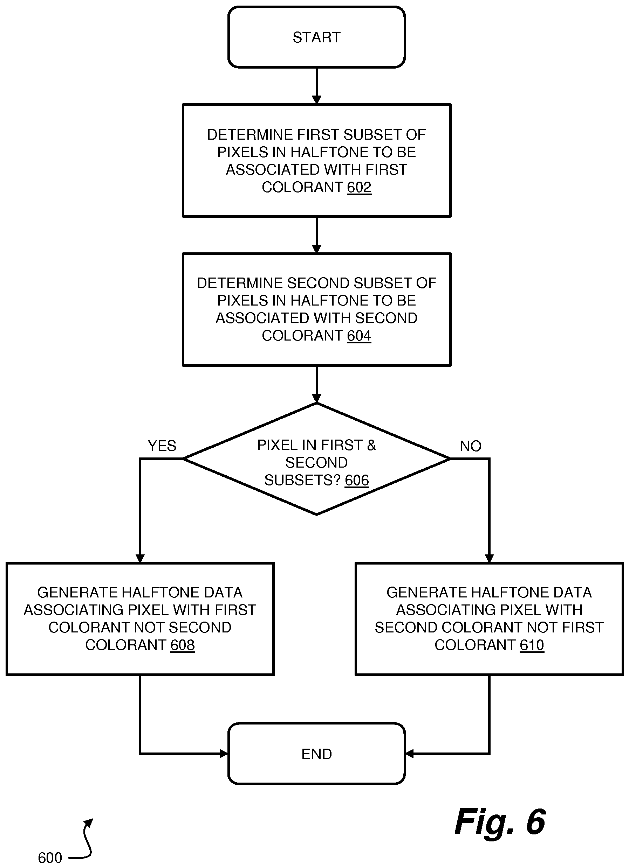

Figure 6 shows an example of a method 600 performed by the overlap control halftone process 508 of Figure 5 to prevent redundant colorant deposition. In block 602, the overlap control halftone process 508 determines a first subset of a plurality of pixels in a halftone to be associated with a first colorant. Similarly, at block 604, the overlap control halftone process 508 determines second subset of the plurality of pixels in the halftone to be associated with a second colorant, the second colorant being different from the first colorant. For example, the first colorant may be a black colorant with relatively high light absorbency and the second colorant may a non-black colorant (e.g. cyan, magenta or yellow) with relatively low light absorbency. At block 606, the overlap control halftone process 508 inspects each pixel in the halftone to determine pixels which are included in the first subset of pixels and the second subset of pixels (i.e. pixels which specify deposition of the first colorant and the second colorant at the same corresponding location on a print medium). For pixels which are included in the first subset of pixels and the second subset of pixels, the overlap control halftone process 508 proceeds to generate pixel data associating those pixels with the first colorant and not the second colorant (i.e. to suppress redundant deposition of the second colorant) at block 608. For pixels which are included in the second subset and not the first subset, the overlap control halftone process 508 proceeds to generate pixel data associating those pixels with the second colorant and not the first colorant at block 610. For completeness, for pixels which are included in the first subset and not the second subset, the overlap control halftone process 508 proceeds to generate pixel data associating those pixels with the first colorant and not the first colorant (not shown). In combination, the pixel data for all pixels in the halftone form halftone data defining the halftone for subsequent use in controlling a colorant deposition system to print the halftone.

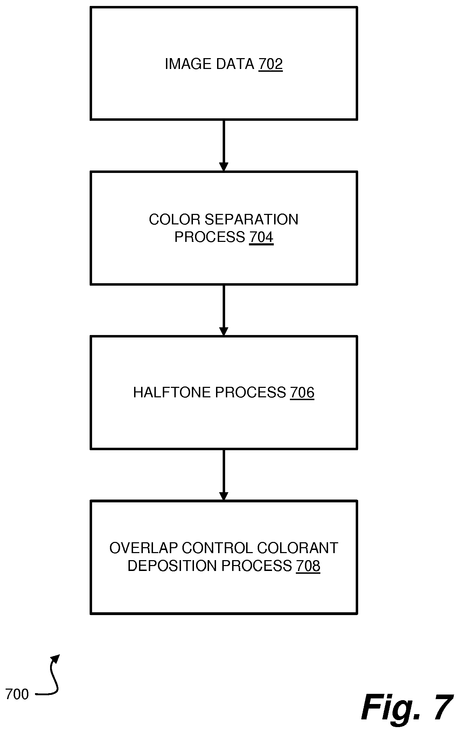

In some examples, the overlap control processing described above with reference to Figures 3 and 4 may be integrated into the color deposition process to provide an overlap control at the color deposition stage. An example of an imaging pipeline 700 incorporating such integrated processing is shown in Figure 7. According to this example, the imaging pipeline 700 receives image data 702 and processes the image data 702 in a color separation process 704 in the same manner to that performed by the color separation process 304 described above with reference to Figure 3. Similarly, data representing the color separated image resulting from the color separation process 704 is provided to a halftone process 706 which proceeds to generate halftone screens for each colorant in the same manner to that described above in relation to the halftone process 306 of Figure 3. The halftone data resulting from the halftone process 306 is provided to an overlap control colorant deposition process 708 which controls colorant deposition onto a print medium whilst suppressing redundant deposition of overlapping colorants. In this manner, overlap control is provided at the colorant deposition stage and earlier parts of the imaging pipeline 706 can operating without consideration of colorant overlap.

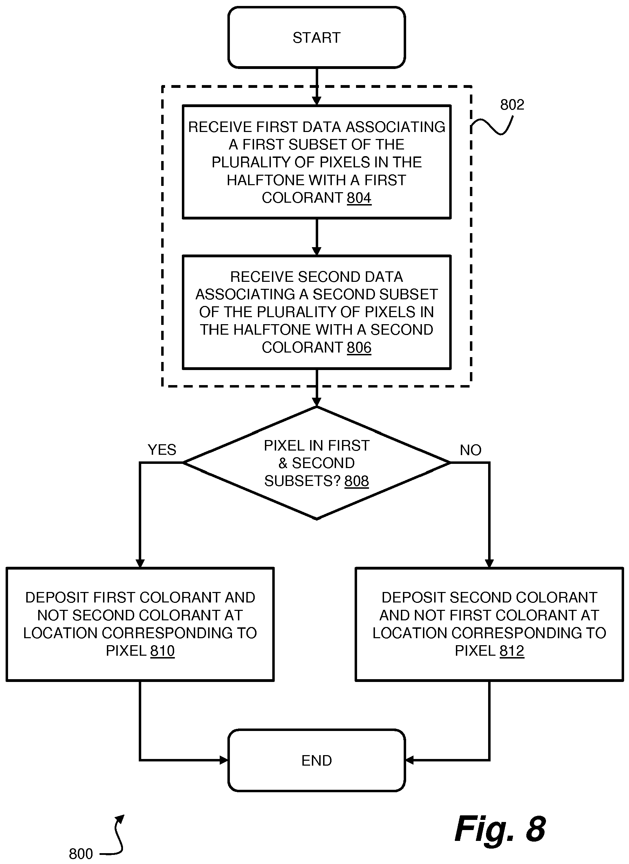

Figure 8 shows an example of a method 800 performed by the overlap control colorant deposition process 710 of Figure 7 to prevent redundant colorant deposition on a print medium. At block 802, the overlap control colorant deposition process 710 receives data representing a halftone comprising a plurality of halftone screens generated by the halftone process 708. The example shown in Figure 8 comprises receipt of first data representing a halftone screen for a first colorant (e.g. a black colorant) at block 804, and second data representing a second halftone screen for a second colorant (e.g. a non-black colorant) at block 806. The first data represents the first halftone screen by associating a first subset of pixels in the halftone with the first colorant and the second data represents the second halftone screen by associating a second plurality of pixels in the halftone with the second colorant. Next, the overlap control colorant deposition process 710 proceeds to control a colorant deposition system to deposit colorant on the print medium in accordance with the halftone data. Thus, for a given pixel in the halftone, the overlap control colorant deposition process 710 determines whether the given pixel is included in both the first subset of pixels and the second subset of pixels defined by the first data and the second data respectively. For example, this determination may be performed in respect of a pixel to be printed on the print medium by the color deposition system. If the given pixel is included in the first subset of pixels and the second subset of pixels, the overlap control colorant deposition process 710 proceeds to control deposition the first colorant and not the second colorant at the corresponding location on the print medium (i.e. to suppress redundant deposition of the second colorant) at block 810. If the given pixel is included in in the second subset and not the first subset, the overlap control colorant deposition process 710 proceeds to control deposition of the second colorant and not the first colorant at the corresponding location on the print medium at block 812. For completeness, if the given pixel is included in the first subset and not the second subset, the overlap control color deposition process 710 proceeds to deposit the first colorant and not the first colorant at the corresponding location on the print medium (not shown). This process defined in blocks, 808, 810 and 812 may be repeated for each pixel in the halftone, thereby preventing deposition of redundant colorant on the print medium.

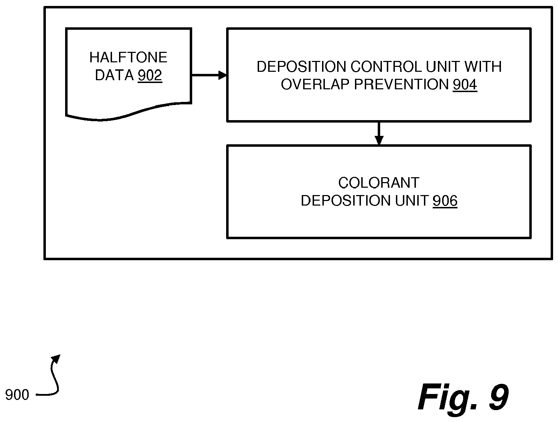

An example of a colorant deposition system 900 performing the method 800 of Figure 8 is shown in Figure 9. The colorant deposition system 900 includes a deposition control unit 904 which is configured to implement method 800 of Figure 8 to control a colorant deposition unit to deposit colorant on a print medium. Specifically, for a given pixel defined by pixel data in the halftone data 902, the deposition control unit 904 determines whether the pixel data specifies redundant deposition of a particular colorant and, in the event that such redundancy is identified, controls the colorant deposition unit 906 to prevent deposition of that colorant.

Certain methods and system described herein may be implemented by a processor that processes computer program code that is retrieved from a non-transitory storage medium. Figure 10 shows an example of a printing system 1000 comprising a machine-readable storage medium 1004 coupled to a processor 1002. The machine-readable storage medium 1004 can be any non-transitory media that can contain, store, or maintain programs and data for use by or in connection with an instruction execution system. The machine-readable media can comprise any one of many physical media such as, for example, electronic, magnetic, optical, electromagnetic, or semiconductor media. More specific examples of suitable machine-readable media include, but are not limited to, a hard drive, a random access memory (RAM), a read-only memory (ROM), an erasable programmable read-only memory, or a portable disc. In Figure 9, the machine-readable storage medium 1004 comprises program code to modify halftone data or control a colorant deposition system to prevent redundant colorant deposition in the manner described above with reference to Figures 1 to 9.

The preceding description has been presented to illustrate and describe examples of the principles described. This description is not intended to be exhaustive or to limit these principles to any precise form disclosed. Many modifications and variations are possible in light of the above teaching.

## Claims

1. A method comprising; generating halftone data representing a plurality of pixels in a halftone, the halftone data comprising:
first data representing a first halftone screen, the first halftone screen associating a first subset of the plurality of pixels in the halftone with a first colorant; and
second data representing a second halftone screen, the second halftone screen associating a second subset of the plurality of pixels in the halftone with a second colorant, the second colorant being different from the first colorant;
identifying one or more pixels common to the first subset of the plurality of pixels and the second subset of the plurality of pixels; and
modifying the second data to remove the one or more pixels from the second subset of pixels.

2. The method of claim 1, wherein the first subset of the plurality of pixels defines a first continuous region corresponding to first dot in a first amplitude modulated halftone pattern and the second subset of the plurality of pixels defines a second continuous region corresponding to a second dot in a second amplitude modulated halftone pattern.

3. The method of claim 1, wherein the first subset of the plurality of pixels are spatially distributed according to a first frequency modulated halftone pattern and the second subset of the plurality of pixels are spatially distributed according to a second frequency modulated halftone pattern.

4. The method of claim 1, wherein the first colorant is relatively more light absorbent than the second colorant.

5. The method of claim 1, wherein the first colorant comprises a black colorant.

6. A non-transitory computer-readable storage medium comprising computer-executable instructions which, when executed by a processor, cause a computing device to perform a method comprising:
determining a first subset of a plurality of pixels in a halftone to be associated with a first colorant;
determining a second subset of the plurality of pixels in the halftone to be associated with a second colorant, the second colorant being different from the first colorant;
generating pixel data associating a pixel in the plurality of pixels in the halftone with the first colorant and not the second colorant when the pixel is included in the first subset and the second subset; and
generating pixel data associating the pixel in the plurality of pixels in the halftone with the second colorant and not the first colorant when the pixel is included in the second subset and not the first subset.

7. The non-transitory computer-readable storage medium of claim 6, wherein the first subset and the second subset set are determined in one or more halftoning processes.

8. The non-transitory computer-readable storage medium of claim 6, wherein the method comprises:
controlling a colorant deposition system to print the halftone in accordance with the pixel data.

9. An apparatus comprising:
a processor;
a color deposition system to deposit a plurality of colorants on a print medium; and
a memory storing computer-executable instructions which, when executed by the processor, cause the processor to:
receive halftone data representing a plurality of pixels in a halftone, the halftone data comprising:
first data representing a first halftone screen, the first halftone screen associating a first subset of the plurality of pixels in the halftone with a first colorant; and
second data representing a second halftone screen, the second halftone screen associating a second subset of the plurality of pixels in the halftone with a second colorant, the second colorant being different from the first colorant;
control the color deposition system to deposit the first colorant and not the second colorant at a location on the print medium associated with a pixel in the halftone, when the pixel is included in the first subset and the second subset; and
control the color deposition system to deposit the second colorant and not the first colorant at the location on the print medium associated with the pixel in the halftone when the pixel is included in the second subset and not the first subset.

10. The apparatus of claim 9, wherein the first subset of the plurality of pixels defines a first continuous region corresponding to first dot in a first amplitude modulated halftone pattern and the second subset of the plurality of pixels defines a second continuous region corresponding to a second dot in a second amplitude modulated halftone pattern.

11. The apparatus of claim 9, wherein the first subset of the plurality of pixels are spatially distributed according to a first frequency modulated halftone pattern and the second subset of the plurality of pixels are spatially distributed according to a second frequency modulated halftone pattern.

12. The apparatus of claim 9, wherein the first colorant is relatively more light absorbent than the second colorant.

13. The apparatus of claim 9, wherein the first colorant comprises a black colorant.

14. The apparatus of claim 9, wherein the computer-executable instructions, when executed by the processor, cause the computing device to:
control the color deposition system to deposit the first colorant and not the second colorant at the location on the print medium associated with the pixel in the halftone, when the pixel is included in the first subset and not the second subset.
